# EUROPÄISCHE PATENTANMELDUNG

(11) **EP 1 205 565 A1**
(43) Veröffentlichungstag der Anmeldung: **15.05.2002**
(21) Anmeldenummer: 01890319.5
(22) Anmeldetag: 14.11.2001
(51) Int. Cl.: C22B 7/04, C04B 5/06

(54) **Verfahren zum Schmelzen von oxidischen Schlacken**

(30) Priorität: 14.11.2000 AT 19162000
(71) Anmelder: Tribovent Verfahrensentwicklung GmbH, 6700 Lorüns (AT)
(72) Erfinder: Edlinger, Alfred, Dipl. Ing., 6780 Bartholomäberg (AT)
(74) Vertreter: Haffner, Thomas M.

(57) **Zusammenfassung**

Bei einem Verfahren zum Schmelzen von oxidischen Schlacken, wie z.B. Hochofenschlacken, Stahlschlacken, Müllschlacken, Mergelschlacken, oxidischen Abfallprodukten oder deren Gemischen unter Verwendung von Brennerlanzen werden die oxidischen Schlacken auf ein Eisenbad chargiert, wobei die Basizität (CaO/SiO₂) der Schlacken auf Werte zwischen 0,6 und 1,6 und der Al₂O₃-Gehalt zwischen 6 Gew.% und 18 Gew.% eingestellt wird. Es werden wenigstens zwei Lanzen in die Schlacken eintauchend derart angeordnet, daß die Achsen von wenigstens zwei Lanzen in Höhenrichtung und/oder quer zur Höhenrichtung versetzt orientiert sind und die Schmelzen in Rotation versetzen.

## Beschreibung

Die Erfindung bezieht sich auf ein Verfahren zum Schmelzen von oxidischen Schlacken, wie z.B. Hochofenschlacken, Stahlschlacken, Müllschlacken, Mergelschlacken, oxidischen Abfallprodukten oder deren Gemischen, unter Verwendung von Brennerlanzen.

Oxidische Abfallprodukte und Mergelschlacken zeichnen sich ebenso wie die meisten anderen oxidischen Schlacken durch relativ hohe Schmelzpunkt- und relativ schlechte Wärmeleitfähigkeit aus, so daß für das Schmelzen von erstarrten Schlacken relativ hohe Energie eingesetzt werden muß. Um den Energieübergang zu verbessern, wurde bereits vorgeschlagen, in derartige Schlacken Brennstoffe und Sauerstoff einzublasen, um auf diese Weise zur Ausbildung einer Schaumschlacke zu gelangen und die Verbrennungswärme besser zu nutzen.

Um Schlackenschmelzen in einer Weise zu raffinieren, daß derartige Schmelzen nach einem Granulieren und Zerkleinern als latenthydraulische oder hydraulische Bindemittel oder Additive zu derartigen Bindemitteln verwendet werden können, ist es in der Regel erforderlich, die Basizität der Schlacken und den Al₂O₃-Gehalt in entsprechender Weise einzustellen. Um eine derartige Einstellung zu gewährleisten, können eine Reihe von Abfallprodukten eingesetzt werden, wobei insbesondere bei Verwendung von Kalkmergel, Mergel, Rechazo, Stahlschlacke und/oder Sand ein nicht unerheblicher Eisenoxidanteil, welcher in der Regel zwischen 5 und 25 Gew.% als FeO bestimmt beträgt, eingeschleppt wird. Schlackenschmelzen mit derartig hohem Eisenoxidgehalt sind äußerst aggressiv für Feuerfestmaterial, welche in der Regel aus Chrom-Magnesit-Tonerde bestehen, wobei das Feuerfestmaterial leicht Ferritphasen und Eutektika mit der Schmelze bildet. Die Standzeit von Feuerfestauskleidungen wird auf diese Weise wesentlich herabgesetzt.

Sofern flüssige Schlacken, insbesondere Stahlwerkschlacken oder Hochofenschlacken unmittelbar neben entsprechenden Aggregaten zum Erschmelzen von Eisen zur Verfügung stehen, wurde bereits vorgeschlagen, den Metalloxidgehalt durch reduktive Behandlung über Metallbädern zu reduzieren. Wenn jedoch bereits erstarrte Schlacken beliebiger Provenienz und insbesondere kostengünstige Abfallstoffe in fester Form eingesetzt werden sollen, um eine zementtechnologisch akzeptable Zusammensetzung des Produktes zu erzielen, ist für die Schmelzwärme nicht nur eine relativ hohe Energie einzusetzen, sondern gleichzeitig auch zu berücksichtigen, daß derartige Gemische beim Schmelzen zu einem vorzeitigen Verschleiß von Feuerfestmaterial führen.

Die Erfindung zielt nun darauf ab, eine Reihe von Ausgangsprodukten der eingangs genannten Art unter möglichst geringem Energieaufwand zu erschmelzen, wobei gleichzeitig die Zusammensetzung der Schmelzen im Hinblick auf den gewünschten Verwendungszweck als synthetische Hochofenschlacke optimiert werden soll. Im Besonderen zielt die Erfindung darauf ab, den Verschleiß an Feuerfestmaterial im Bereich der Schmelzen zu verringern und die Wärmeübertragung in die Schmelzphase zu verbessern.

Zur Lösung dieser Aufgabe besteht das erfindungsgemäße Verfahren im wesentlichen darin, daß die oxidischen Schlacken auf ein Eisenbad chargiert werden, wobei die Basizität (CaO/SiO₂) der Schlacken auf Werte zwischen 0,6 und 1,6 und der Al₂O₃-Gehalt zwischen 6 Gew.% und 18 Gew.% eingestellt wird und daß wenigstens zwei Lanzen in die Schlacken eintauchend derart angeordnet werden, daß die Achsen von wenigstens zwei Lanzen in Höhenrichtung und/oder quer zur Höhenrichtung versetzt orientiert sind und die Schmelzen in Rotation versetzen.

Eine Verfahrensweise, bei welcher unter reduzierenden Bedingungen aus Eisenerzen ein Eisenbad gewonnen werden kann, ist beispielsweise in Form des sogenannten Hi-Smelt-Verfahrens bekannt. Bei diesem bekannten Verfahren wird in das entsprechend zerkleinerte und vorreduzierte Eisenerz mit Lanzen Brennstoff eingebracht, wobei unter reduzierenden Bedingungen metallisches Eisen aus Eisenerzen sedimentiert. Die resultierenden Schlacken eines derartigen Verfahrens sind aber keineswegs unmittelbar für eine weitere zementtechnologische Verwertung optimiert und derartige Verfahren werden daher im Hinblick auf eine möglichst hohe Eisenausbeute unter entsprechend reduzierenden Bedingungen und damit entsprechend höherem Energieverbrauch geführt. Demgegenüber sieht das erfindungsgemäße Verfahren die Möglichkeit vor, unterschiedliche Ausgangsprodukte, und insbesondere Abfallprodukte zu erschmelzen, um in der Schmelze die gewünschte Zusammensetzung einzustellen und gleichzeitig sicherzustellen, daß bei Verwendung entsprechend eisenoxidhältiger Ausgangsprodukte der Eisenoxidgehalt des Schlackengemisches unter Grenzwerten gehalten wird, welche zu einem erhöhten Verschleiß von Feuerfestmaterial führen würden. Insbesondere die Anhebung des Al₂O₃-Gehaltes durch Beimengungen von Mergel oder Kalkmergel sowie der Einsatz von Stahlschlacken würde, wie bereits erwähnt, zu einem relativ hohen Eisenoxidgehalt und damit zu einem relativ raschen Verschleiß des Feuerfestmaterials führen, wobei dadurch, daß nun die festen oxidischen Schlacken auf ein Eisenbad chargiert werden, in entsprechender Weise sichergestellt werden kann, daß der zu hohe Eisenoxidgehalt durch das darunterliegende Eisenbad reduziert und aus der Schlackenschmelze abgetrennt werden kann. Dadurch, daß nun die Achsen von wenigstens zwei Lanzen in Höhenrichtung und/oder quer zur Höhenrichtung versetzt orientiert sind, gelingt es die schmelzflüssige Schlacke in Rotation zu versetzen, um auf diese Weise die Wärmeübertragung wesentlich zu verbessern und eine intensive und rasche Reaktion sowie eine Abscheidung von zu hohen Eisenoxidgehalten durch Reduktion von Eisen in das Eisenbad bei entsprechend geringerem Energieverbrauch zu gewährleisten. Im Rahmen des erfindungsgemäßen Verfahrens können auch entsprechend minderwertige Brennstoffe eingesetzt werden, da mit Rücksicht auf die Zielbasizität der Schlacken ein Entschwefeln gelingt, wobei Schwefel sulfidisch in die Schlacke eingebunden wird. Die durch die Orientierung der Lanzen erzielten Drehimpulse führen zu einer rotierenden Gasblase und damit zu einer dynamischen Reaktionszelle, wobei es aufgrund der Strömungs- und Fliehkräfte sowie der Gasentwicklung aus der Schmelze zu einem massiven Tröpfchenaustrag in den Gasraum oberhalb der Schlackenschmelze kommt. In diesem Gasraum kann eine effiziente Nachverbrennung vorgenommen werden, wobei die entsprechend überhitzten Tröpfchen wiederum in die Schlacke zurückfallen und auf diese Weise zu einer weiteren Erwärmung der Schlacke und einem sicheren Erschmelzen der relativ hochschmelzenden Ausgangsprodukte genutzt werden können.

Die Reduktion des gegebenenfalls zu hohen Eisenoxidgehaltes der Schlacken durch das darunterliegende Eisenbad kann naturgemäß nur dann mit Sicherheit gewährleistet werden, wenn das Eisenbad einen entsprechenden Kohlenstoffgehalt aufweist, wobei derartige reduzierende Bedingungen insbesondere dann von wesentlicher Bedeutung sind, wenn chromhältige Ausgangsstoffe erschmolzen werden. In der rotierenden Gasphase kann nämlich dann, wenn eine Chromoxidreduktion der Schlacke erforderlich ist, eine entsprechend unterstöchiometrische Verbrennung stattfinden, wodurch. nicht nur die Rückoxidation von Eisen sondern vor allen Dingen eine effiziente Chromoxidreduktion gewährleistet ist, ohne den Brennstoffverbrauch wesentlich zu erhöhen. Übliche Schmelzverfahren für oxidische Schlacken, bei welchen Sauerstoff und Brennstoffe in die Schlacke eingeblasen werden, arbeiten zur Verringerung des Energiebedarfes mit vollständiger Verbrennung, wobei die Verringerung des Energiebedarfes trotz unvollständiger Verbrennung im vorliegenden Fall durch die entsprechende Schlackenrotation bzw. hohe Turbulenz in der Schlacke gelingt.

Mit Vorteil wird im Rahmen des erfindungsgemäßen Verfahrens so vorgegangen, daß über wenigstens eine Lanze Additive mit Treibgas und über wenigstens eine weitere Lanze Kohlenstoffträger, wie z.B. Kohle, Petrolkoks oder Pyrolysekoks, eingeblasen werden, wobei die Lanzen für den Eintrag von Kohleträgern in Höhenrichtung unterhalb der Lanzen für Additive oder Verbrennungsgase münden. Dadurch, daß die Lanzen für den Eintrag von Kohlenträgern in Höhenrichtung unterhalb der Lanzen für Additive oder Verbrennungsgase münden, wird sichergestellt, daß Kohleträger in entsprechend hohem Maße in das Eisenbad eingetragen werden und auf diese Weise ein entsprechender Kohlenstoffgehalt des Metallbades immer sichergestellt wird und überschüssiges Eisenoxid sowie Chromoxide sicher reduziert werden können. Die Kohlenstoffträger werden hiebei mit hohem Impuls auf das Metallbad aufgeblasen, wofür mit Vorteil die Ausbildung so getroffen ist, daß die Lanzen für Kohlenstoffträger mit gegenüber den Lanzen für Additive höherem Gasdruck beaufschlagt werden.

Die gewünschte Zusammensetzung der Zielschlacke läßt sich auch bei relativ hohem eingeschleppten Eisenoxidanteil mit Sicherheit dann gewährleisten, wenn, wie es einer bevorzugten Weiterbildung der Erfindung entspricht, so vorgegangen wird, daß der Kohlenstoffgehalt des Metallbades durch Aufblasen von Kohlenstoffträgern auf Werte über 2,5 Gew.% gehalten wird.

Die Rotationsbewegung der schmelzflüssigen Schlacken und die damit verbundene Turbulenz führt, wie bereits erwähnt, zu einem relativ hohen Tröpfchenauswurf, wodurch der Wärmeübergang aus dem Feuerungsgas auf die Schlackenschmelze wesentlich verbessert werden kann, da im Raum oberhalb der Schlacke eine entsprechende Nachverbrennung vorgenommen werden kann, ohne daß hiebei die Gefahr einer Rückoxidation von Eisen aus dem Eisenbad entsteht. Dies insbesondere auch deshalb, weil der Schlackentröpchen-Anteil im Nachverbrennungsraum besonders hoch ist. Mit Vorteil wird aus diesem Grunde das Verfahren so geführt, daß auf die Schlacke wenigstens eine Heißwindlanze mit Luft oder bis zu etwa 35 Vol.% O₂ angereicherter Luft gerichtet wird, wobei die in der Nachverbrennung erzeugte Energie wirkungsvoll als Schmelzwärme zum Einsatz gebracht werden kann.

Um in allen Fällen sicherzustellen, daß Rückoxidation und damit eine neuerliche Anhebung des für die Feuerfestauskleidung ungünstigen Eisenoxidanteiles erfolgt, wird mit Vorteil so vorgegangen, daß Heißwind in einer Menge aufgeblasen wird, welche eine maximale CO₂-Konzentration von unter 20 Vol.% im Raum oberhalb der Schlacke ergibt. Der benötigte Nachverbrennungsgrad ist dabei abhängig vom FeO-Gehalt der Eingangsschlacke, da die FeO-Reduktion eine endotherme Reaktion darstellt. Die Nachverbrennung kann auch in vorgeschalteten Vorwämer-/Kalzinationsaggregaten erfolgen. Nur bei hohem FeO-Gehalt der Schlacke und kaltem Eintragsgut wird eine hohe Nachverbrennung angestrebt.

Feuerfestmaterial kann im Rahmen des erfindungsgemäßen Materials lediglich im Bereich der Schmelze vorgesehen sein, wobei sich eine besonders wirtschaftliche Verfahrensweise dann ergibt, wenn oberhalb der Schlackenschmelze ein Heißzyklon mit flüssigkeitsgekühlten Wänden eingesetzt wird.

Die Verwendung unterschiedlicher Gasdrucke in unterschiedlichen Lanzen führt insgesamt zu einer weiteren Erhöhung der Turbulenz bzw. zu weiteren Rotationsimpulsen und damit einer asymmetrischen Bewegung, welche den Wärme- und Sauerstoffaustausch verbessert.

Zusätzliche Additive können mit heißen Treibgasen eingebracht werden, wobei mit Vorteil so vorgegangen wird, daß Additive mit heißen Treibgasen einer Temperatur von maximal 800° C in die Schlacken eingeblasen werden. Bei derartigen Temperaturen erfolgt eine Trocknung und effiziente Vorwärmung sowie bereits zumindest teilweise eine Kalzination der Ausgangsprodukte, wobei aufgrund der schmelzreduzierenden Fahrweise Schwefel in die Schlacke sulfidisch eingebunden wird. Die eintauchenden Lanzen können wassergekühlt sein, um den Lanzenverschleiß zu reduzieren. Über diese Lanzen können eine Reihe weiterer Abfall-bzw. Alternativbrennstoffe eingebracht werden, wobei bevorzugt so vorgegangen wird, daß z.B. gebrauchte organische Lösungsmittel, Altöle, Klärschlämme und/oder Abwässer aus der Photoentwicklung in die Schlacken eingedüst werden. Es kann bevorzugt auch so vorgegangen werden, daß über die Lanzen asbesthaltiges Material in die Schlacken eingeblasen wird. Weiters ist es auch möglich, über die Lanzen Altasphalt mit Teilchengrößen von d < 5mm in das Eisenbad einzublasen.

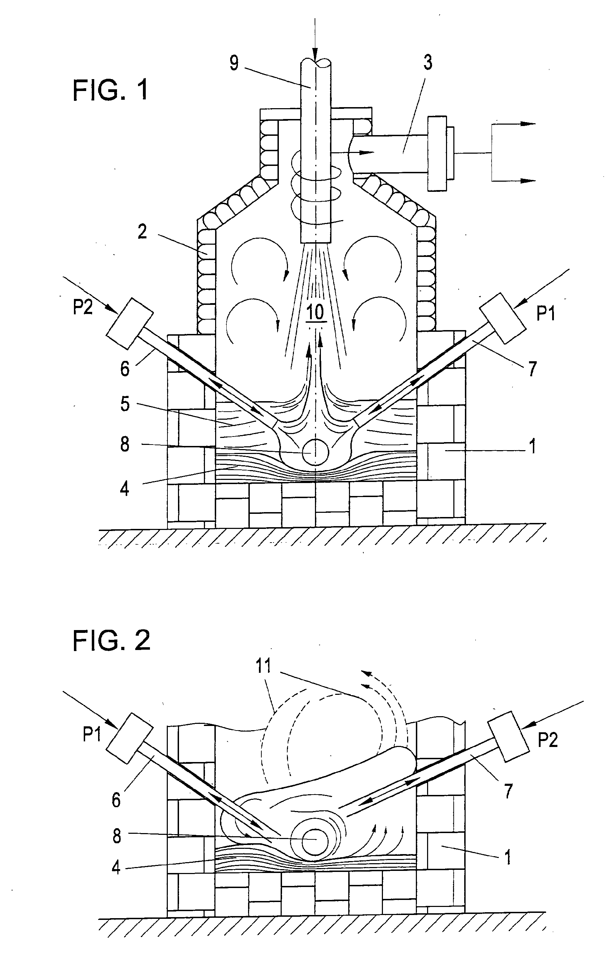

Die Erfindung wird nachfolgend an Hand eines in der Zeichnung schematisch dargestellten Ausführungsbeispieles näher erläutert. In dieser zeigen Fig. 1 einen schematischen Schnitt durch eine zur Durchführung des erfindungsgemäßen Verfahrens geeignete Vorrichtung und Fig. 2 ein Detail des unteren Bereiches der Vorrichtung nach Fig. 1 bei asymmetrischer Beaufschlagung der Lanzen mit unterschiedlichen Drucken.

In Fig. 1 ist ein mit Feuerfestmaterial 1 zugestelltes Schmelzgefäß ersichtlich, in dessen oberen Bereich wassergekühlte Wände 2 vorgesehen sind, welche einen Zyklonkopf ausbilden, aus welchem über die Leitung 3 Heißwind zum Zwecke der Regeneration abgezogen werden kann.

Der untere mit Feuerfestmaterial ausgekleidete Bereich des Schmelzaggregates enthält ein Eisenbad 4, auf welches Schlacken 5 chargiert werden. In die Schlacken münden Düsenlanzen 6 und 7, wobei über die Düsenlanze 6 mit Treibgastemperaturen bis etwa 800° C Additive in die Schlacke eingebracht werden können. Die Düsenlanze 7 verwendet als Treibgas bevorzugt Luft oder Stickstoff, wobei über diese Lanze Kohle, Petrolkoks oder Pyrolysekoks bzw. andere Kohlenstoffträger in die Schlacke eingeblasen werden. Die Mündung der Düsenlanze 7 ist hiebei so gestaltet, daß Kohlenstoff in das darunterliegende Eisenbad mit hohem Impuls eingestoßen wird, wozu bevorzugt die Düse 7 mit einem Druck P1 betrieben wird, welcher größer ist als der Gasdruck P2 für den Betrieb der Düse 6. Im Inneren des Schmelzaggregates bildet sich nahe den Mündungen der Düsenlanzen 6 und 7 eine Gasblase 8 aus, wobei durch die Orientierung der Düsen eine rotierende Bewegung der Schmelze 5 erzielt und das darunterliegende Eisenbad in einer Weise verformt werden kann, daß es seitlich im Bereich der Feuerfestauskleidung 1 aufsteigt, wodurch die wirksame Grenzfläche zwischen Schlacke und Eisenbad erhöht und die Feuerfestauskleidung 1 weiter geschützt werden kann. Zusätzlich ist in Fig. 1 eine Heißwindlanze 9 ersichtlich, über welche für eine Nachverbrennung geeigneter Sauerstoff in den Gasraum 10 oberhalb der Schmelze eingebracht wird. Bedingt durch die hohe Turbulenz gelangen Tröpfchen aus dem Eisenbad und vor allem der Schlacke in den darüberliegenden Gasraum, wodurch ein intensiver Wärmeaustausch gewährleistet ist. Die Aufkohlung des Eisenbades auf den erforderlichen Kohlenstoffgehalt gelingt durch Einblasen von Kohlenstoffträgern über die Lanze 7 unmittelbar in das Eisen.

Die Düsen könnten prinzipiell in unterschiedlicher Höhenlage mit unterschiedlicher Orientierung münden, um auf diese Weise die geforderte Turbulenz sicherzustellen und gleichzeitig durch Fliehkraft aufgrund des höheren spezifischen Gewichtes von Eisen relativ zum spezifischen Gewicht von Schlacken ein Aufsteigen des Eisenbades an den der Feuerfestauskleidung 1 benachbarten Randbereichen zu erzielen. Insgesamt wird ein hohes Maß an Turbulenzen naturgemäß bei einer hohen Asymmetrie der Beaufschlagung erzielt, wie dies in Fig. 2 ersichtlich ist. Bei der in Fig. 2 dargestellten Ausbildung wird über die Lanze 6 Kohlenstoff in das Eisenbad eingetragen und der für die Verbrennung erforderliche Kohlenstoff eingebracht, wobei diese Lanze wiederum mit höherem Druck P1 beaufschlagt wird, als die in Achsrichtung höher mündende Lanze 7 für den Eintrag von Additiven mit entsprechend geringerem Gasdruck P2. Mit der strichlierten Linie 11 wird die Flugbahn von Tröpfchen im Gasraum, in welchen die Heißwindlanze 9 mündet, angedeutet.

Durch die in die Schlacke eintauchenden Lanzen wird die Schlacke in das Eisenbad gedrückt und aufgrund der rotierenden Bewegung und der Ausbildung der entsprechenden Fliehkraft die entsprechend gewünschte Verformung der Oberfläche des Eisenbades erzielt. Die rotierende Gasblase 8 kann durch Wahl geeigneter Druckdifferenzen bzw. durch Wahl entsprechender Orientierung der Lanze, welche unter anderem auch tangential zu dieser Gasblase münden können, in die gewünschte Rotation bei entsprechender Turbulenz versetzt werden, wobei die für die Aufkohlung des Eisenbades vorgesehene Düsenlanze bevorzugt nahe der Oberfläche des Eisenbades mündet, um Kohlepartikel mit hohem Impuls in das Eisenbad einzutragen. Der Kohlenstoffgehalt des Eisenbades wird über das Trägergas der Düsenlanze sowie das Sauerstoffangebot der Heißwindlanze auf 2,5 bis 4,3 eingestellt, wobei der Boden des Eisenbades entsprechend der Orientierung der Lanzenströmung somit optimiert mit Feuerfestmaterial zugestellt sein kann.

Aufgrund der schmelzreduzierenden Fahrweise wird Schwefel in die Schlacke sulfidisch eingebunden, wobei die Düsenlanzen wassergekühlt sein könnnen und die Heißwindlanze gegebenenfalls zusätzlich zum Einblasen von Schlackenadditiven herangezogen werden kann. Die Verfahrensweise eignet sich bevorzugt für den Einsatz von Abfall bzw. Alternativbrennstoffen, wobei flüssige und staubige Einsatzmaterialien über die Düsenlanzen und grobstückige Produkte von oben auf die Schmelze aufgegeben werden können.

## Patentansprüche

1. Verfahren zum Schmelzen von oxidischen Schlacken, wie z.B. Hochofenschlacken, Stahlschlacken, Müllschlacken, Mergelschlacken, oxidischen Abfallprodukten oder deren Gemischen, unter Verwendung von Brennerlanzen, **dadurch gekennzeichnet, daß** die oxidischen Schlacken auf ein Eisenbad chargiert werden, wobei die Basizität (CaO/SiO₂) der Schlacken auf Werte zwischen 0,6 und 1,6 und der Al₂O₃-Gehalt zwischen 6 Gew.% und 18 Gew.% eingestellt wird und daß wenigstens zwei Lanzen in die Schlacken eintauchend derart angeordnet werden, daß die Achsen von wenigstens zwei Lanzen in Höhenrichtung und/oder quer zur Höhenrichtung versetzt orientiert sind und die Schmelzen in Rotation versetzen.

2. Verfahren in Anspruch 1, **dadurch gekennzeichnet, daß** über wenigstens eine Lanze Additive mit Treibgas und über wenigstens eine weitere Lanze Kohlenstoffträger, wie z.B. Kohle, Petrolkoks oder Pyrolysekoks, eingeblasen werden, wobei die Lanzen für den Eintrag von Kohleträgern in Höhenrichtung unterhalb der Lanzen für Additive oder Verbrennungsgase münden.

3. Verfahren nach Anspruch 1 oder 2, **dadurch gekennzeichnet, daß** die Lanzen für Kohlenstoffträger mit gegenüber den Lanzen für Additive höherem Gasdruck beaufschlagt werden.

4. Verfahren nach Anspruch 1, 2 oder 3, **dadurch gekennzeichnet, daß** der Kohlenstoffgehalt des Eisenbades durch Aufblasen von Kohlenstoffträgern auf Werte über 2,5 Gew.% gehalten wird.

5. Verfahren nach einem der Ansprüche 1 bis 4, **dadurch gekennzeichnet, daß** auf die Schlacke wenigstens eine Heißwindlanze mit Luft oder bis zu etwa 35 Vol.% O₂ angereicherter Luft gerichtet wird.

6. Verfahren nach einem der Ansprüche 1 bis 5, **dadurch gekennzeichnet, daß** Heißwind in einer Menge aufgeblasen wird, welche eine maximale CO₂-Konzentration von unter 20 Vol.% im Raum oberhalb der Schlacke ergibt.

7. Verfahren nach einem der Ansprüche 1 bis 6, **dadurch gekennzeichnet, daß** oberhalb der Schlackenschmelze ein Heißzyklon mit flüssigkeitsgekühlten Wänden eingesetzt wird.

8. Verfahren nach einem der Ansprüche 1 bis 7, **dadurch gekennzeichnet, daß** Additive mit heißen Treibgasen einer Temperatur von maximal 800° C in die Schlacken eingeblasen werden.

9. Verfahren nach einem der Ansprüche 1 bis 8, **dadurch gekennzeichnet, daß** über Lanzen flüssige Abfall- bzw. Alternativbrennstoffe, wie z.B. gebrauchte organische Lösungsmittel, Altöle, Klärschlämme und/oder Abwässer aus der Photoentwicklung, in die Schlacken eingedüst werden.

10. Verfahren nach einem der Ansprüche 1 bis 9, **dadurch gekennzeichnet, daß** über Lanzen asbesthaltiges Material in die Schlacken eingeblasen wird.

11. Verfahren nach einem der Ansprüche 1 bis 10, **dadurch gekennzeichnet, daß** über Lanzen Altasphalt mit Teilchengrößen von d < 5mm in das Eisenbad eingeblasen wird.
